# EUROPÄISCHE PATENTSCHRIFT

(11) **EP 3 245 349 B1**
(45) Veröffentlichungstag und Bekanntmachung des Hinweises auf die Patenterteilung: **15.04.2020**
(21) Anmeldenummer: 16708340.1
(22) Anmeldetag: 13.01.2016
(51) Int. Cl.: E04C 5/07

(54) **BEWEHRUNGSSTAB AUS FILAMENTVERBUND UND VERFAHREN ZU DESSEN HERSTELLUNG**
REINFORCING BAR OF FILAMENT COMPOSITE AND METHOD FOR PRODUCING SAME
BARRE D'ARMATURE COMPOSÉE D'UN COMPOSITE À BASE DE FILAMENTS ET PROCÉDÉ DE FABRICATION DE LADITE BARRE

(30) Priorität: 13.01.2015 DE 102015100386
(43) Veröffentlichungstag der Anmeldung: 22.11.2017
(73) Patentinhaber: Technische Universität Dresden, 01069 Dresden (DE)
(72) Erfinder: SCHLADITZ, Frank, 04824 Beucha (DE); LIEBOLDT, Matthias, 01217 Dresden (DE); CURBACH, Manfred, 01187 Dresden (DE); TIETZE, Matthias, 04155 Leipzig (DE)
(74) Vertreter: Gottfried, Hans-Peter
(86) Internationale Anmeldenummer: PCT/DE2016/100014
(87) Internationale Veröffentlichungsnummer: WO 2016/112898

(56) Entgegenhaltungen:
- EP-A2- 0 170 499
- DE-A1- 4 439 534
- GB-A- 1 425 031

## Beschreibung

Die Erfindung betrifft ein Verfahren zur Herstellung eines ausgehärteten Bewehrungsstabs, der zum Einbau in ein Betonbauteil vorgesehen ist.

Der Baustoff Beton ist sehr gut geeignet zur Aufnahme von Druckbelastungen. Er besitzt jedoch nur ein geringes Aufnahmevermögen hinsichtlich einer Zugsbeanspruchung und zeigt ein ausgeprägt sprödes Materialversagen. Daher benötigen Betonbauteile zur Aufnahme von Zugspannungen, beispielsweise resultierend aus Biegemomenten und aus Zwangsspannungen wie Schwinden, Temperatureinfluss, eine Bewehrung. Durch die Kombination von Beton und zugkraftaufnehmender Bewehrung entsteht ein hochleistungsfähiger Baustoff. Die Bewehrung kann hierbei in verschiedenen geometrischen Anordnungen eingebaut werden und es kommen vor allem gitterförmige Strukturen und Stäbe zur Anwendung. Als Material wird zumeist Baustahl eingesetzt. Die Stahlbewehrung kann im Beton rosten und zu erheblichen Bauwerksschäden führen. Außerdem sind diese Bewehrungen durch die hohe Dichte von Stahl sehr schwer und unhandlich. In Abhängigkeit vorliegender Expositionen müssen Stahlbewehrungen mit Betonüberdeckungen von bis zu 5,5 cm gegen Korrosion geschützt werden.

Zur Reduzierung der erforderlichen Betonüberdeckungen wird deshalb seit mehreren Jahren an korrosionsunempfindlichen Materialien wie Carbon oder alkaliresistentem Glas geforscht und für eine breite Anwendung vorbereitet. Ein erster Schritt wurde mit dem Verbundmaterial Textilbeton erreicht.

Textilbeton oder auch textilbewehrter Beton ist ein Verbundwerkstoff aus Beton und einem textilen Flächengebilde (v.a. Gelege). Seit ca. 1994 Jahren wird sehr intensiv am Thema Textilbeton geforscht, bei dem textile Flächengebilde (Gelege) verwendet werden. Diese bestehen aus Multifilamentgarnen mit den Materialien Glas (insbesondere alkaliresistent), Carbon oder Basalt. Diese einzelnen Multifilamentgarne (Roving) bestehen wiederum aus mehreren tausend Filamenten mit einem Durchmesser von ca. 5 bis 8 µm (bei Carbon). Würden die Rovings unbeschichtet in den Beton eingelegt, würden sich lediglich die äußeren Filamente der Rovings mit dem Beton verbinden und die inneren Filamente des Rovings keine Verbindung zum Beton haben. Daher würden sich somit in erster Linie auch nur die äußeren Filamente an der Lastabtragung beteiligen. Die aufgrund von Anzahl und Zugfestigkeit der Filamente mögliche Tragfähigkeit wird dabei nicht ausgenutzt.

Zur weitgehenden Beteiligung aller Filamente am Lastabtrag wird der Roving bzw. das Textil mit einer Beschichtung versehen, die in die Struktur infiltriert. Dies sind meist Kunststoffe, wie beispielsweise Stryrolbutadien oder Epoxidharz. Durch diese Beschichtung werden zunächst alle Filamente eines Rovings miteinander verbunden. Dieser kompakte Roving ähnelt einem faserverstärkten Kunststoff. Wenn dieser Roving in den Beton eingelegt wird, verbindet sich der Beton wiederum nur mit den äußeren Filamenten. Der Kunststoff stellt aber sicher, dass sich ein Großteil der Filamente am Lastabtrag beteiligt. Die Tragfähigkeit der beschichteten Strukturen ist damit deutlich höher als die der unbeschichteten Rovings oder von anderen Textilien. Genau wie hier beschrieben, erfolgt die Lastabtragung auch bei stabförmigen Bewehrungen aus faserverstärkten Kunststoff.

Solche Bewehrungsstäbe sind bekannt. Die Druckschrift EP 1 253 259 A2 beschreibt einen Bewehrungsstab, der aus faserverstärktem Kunststoff besteht und mit einer Rippung versehen ist. Eine solche Rippung, wie sie auch bei Bewehrungsstäben aus Stahl anzutreffen ist, sorgt für einen besseren Verbund zur umgebenden Betonmatrix bzw. kompensiert im vorliegenden Fall eine ggf. verminderte Bindung zwischen Beton und Kunstharz.

Die Druckschrift DE 431 32 27 A1 betrifft ein vorgespanntes Bewehrungselement mit sich in mindestens einer Richtung erstreckenden, zentrisch angeordneten Spanngliedern aus Stahl, Glas, Aramid oder Kohlenstoff in einer Beton- oder Mörtelmatrix und mit für den Verbund mit dem Umgebungsbeton ausgebildeten Außenflächen. Die Beton- oder Mörtelmatrix enthält biegsame Kunststoff-, Glas-, Karbon- oder Metallfasern oder steife Verstärkungsdrähte oder -streifen aus Metall in einer für die Vergleichmäßigung der Rissverteilung wirksamen Menge.

Die Druckschrift DE 10 2009 057 074 A1 beschreibt ein vorgefertigtes Bauelement für die Errichtung von Decken mit einer Betonschale. Das Deckenbauelement ist gekennzeichnet durch in die Betonschale eingebettete, zueinander im Abstand angeordnete Spannbetonelemente. Vorzugsweise sind die Spannbetonelemente als Spannbetonstäbe ausgebildet. Die Spannbetonstäbe verlaufen parallel im Abstand zueinander, vorzugsweise parallel zu einander gegenüberliegenden Plattenrändern des Deckenbauelements.
Eine solche Konstruktion ist für den vorgesehenen Anwendungsfall in einem Deckenbauelement geeignet und benötigt dazu keine Anbindung an die Betonmatrix auf der gesamten Länge. Für den Einsatz bei universellen Bewehrungselementen ist das vorgeschlagene Verfahren aber ungeeignet.

Die verwendeten Bewehrungsmaterialien, wie beispielsweise Carbon, und auch der Beton sind deutlich temperaturbeständiger und dauerhafter als die Beschichtung. Durch Temperaturerhöhung werden die Eigenschaften der Beschichtung bzw. des Bewehrungsmatrixmaterials negativ beeinflusst. Dadurch sinkt die Anzahl der Filamente, die sich an der Lastabtragung beteiligen, rasch ab. Entsprechend nimmt auch die Festigkeit des Bauteils ab.

Die im Textilbeton derzeit eingesetzten Bewehrungen, z. B. in Form von Textilgeweben, weisen einige allgemeine und spezifische Nachteile auf. Außerdem erfordern diese einen vorgelagerten Prozess der Textilherstellung. Um die Vorteile der gerichteten Fasern im Beton weiter nutzen zu können, wird in der Druckschrift DE 10 2006 018 407 A1 ein Bewehrungselement für Betonbauteile vorgestellt, welches aus Faserbündeln (Rovings) und einer mineralischen Bindemittelmatrix, z. B. Feinbeton, besteht. Diese Rovings und das mineralische Bindemittel bilden Stege, welche durch Knotenbildungen eine Bewehrungseinheit ergeben.
Eine solche zweidimensionale Bewehrungsstruktur ist für flächige, maßlich passende Betonbauteile geeignet. Sie bietet jedoch keinen Ersatz für Bewehrungsstäbe als eindimensional wirksame, universell einsetzbare Grundbauelemente einer Bewehrungsstruktur. Die Aufgabe, Filamente mit mineralischem Material zu umhüllen, wird hier nur im Rahmen der vorgegebenen Gitterstruktur gelöst, weil dort die Einbringung der Filamente so erfolgen kann, dass sie durch sandwichartiges Schichten mit dem Beton diese Umhüllung in angemessenem Umfang versprechen.

Einen universellen Einsatz von Faserbewehrungen auch für eindimensional wirksame Grundbauelemente einer Bewehrungsstruktur sieht die Druckschrift CH 691 608 A vor, wobei auch hier die Fasern entweder in einem pultrudierten Stab in Kunstharz gebunden oder vorgespannt in die Bewehrung in der Weise eingebracht werden, dass sie an den Enden durch Ankerhülsen verankert sind.

Diese Lösung ist exemplarisch für den Stand der Technik und gibt die beiden grundsätzlichen Richtungen vor. Eine Vielzahl von Lösungen sieht kunstharzgebundene Fasern vor, wobei das entstehende Kompositmaterial die Bewehrung bildet. Hierbei hängt aber die Leistungsfähigkeit der Bewehrung von der Beständigkeit des Matrixmaterials der Bewehrung ab, da diese bestimmt, inwieweit eine Vielzahl von Fasern an der Lastabtragung teilnimmt. Da es bei den als Matrixmaterial eingesetzten Kunstharzen aber erhebliche Einschränkungen hinsichtlich thermischer Beständigkeit und Dauerfestigkeit gibt, ist auch ein solcherart gewonnenes Bewehrungselement starken Einschränkungen beim Einsatz unterworfen.

Die zweite häufig anzutreffende Lösung betrifft ein Bewehrungselement mit vorgespannten Fasern. Die Fasern sind hierzu an den Enden des Bewehrungselements mittels Ankerhülsen verankert, die damit sämtliche Fasern in die Lastabtragung einbeziehen, ohne dass eine sichere Anbindung an die umgebende Betonmatrix auf der gesamten Länge und für alle Fasern notwendig wäre. Ein solches Bewehrungselement ist jedoch nur sehr eingeschränkt einsetzbar und muss für den konkreten Anwendungsfall in den geforderten Maßen extra gefertigt werden. Ein Zuschnitt beispielsweise, wie bei herkömmlicher Stahlbewehrung oder auch bei den vorgenannten Kompositmaterialien üblich und möglich, kann hier nicht erfolgen. Ein flexibler Einsatz und ein Ersatz herkömmlicher Bewehrungselemente sind nicht möglich.

Eine kleinere Gruppe von vorgeschlagenen Lösungen befasst sich mit der direkten Einbringung von Fasern in die Betonmatrix, in das spätere Betonbauteil. Dies ist zumeist durch ungerichtete Fasern vorgesehen, wodurch aber keine gerichtete Verstärkung erreicht werden kann. Die Orientierung der Filamente ist stark von der Herstellungstechnologie abhängig und in der Regel zufällig, wobei ein Teil der Fasern in Lastrichtung zu liegen kommt. Die übrigen Fasern bleiben im günstigsten Fall ohne Wirkung, im ungünstigen Fall bilden sie Inhomogenitäten, die ein Risswachstum fördern.

Es ist aber, so wie auch in der Druckschrift CH 691 608 A, zur Vermeidung aller zuvor angeführten Nachteile die Notwendigkeit erkannt worden, gerichtete, ungespannte Filamente direkt in die Betonmatrix einzubringen, die es beispielsweise auch ermöglichen würden, den so gewonnenen Bewehrungsstab beliebig zu teilen. Die hierzu vorgeschlagenen Lösungsmöglichkeiten sind aber noch unbefriedigend, denn allein durch einen undefinierten Druck, hier durch Schleudern hervorgerufen, wird nicht sichergestellt, dass der Beton auch in den Roving eindringt und die Filamente benetzt. Dies ist aber die Voraussetzung dafür, dass eine Beteiligung aller Filamente an der Lastabtragung und zugleich eine sichere Anbindung an die spätere, umgebende Betonmatrix erreicht werden kann. Dies ist jedoch nach der in der Druckschrift CH 691 608 A vorgeschlagenen Lösung gerade nicht gesichert, sondern eher vom Zufall abhängig.

Die Bewehrung aus faserverstärkten Kunststoffen, in flächiger oder stabförmiger Form, besitzt eine Beschichtung aus einem organischen polymeren Bindemittel welches weder ausreichend temperaturbeständig noch dauerhaft ist. Das Problem der bisher verwendeten faserverstärkten Bewehrungselemente ist es deshalb, dass keine dauerhaft gesicherte oder bei höheren Temperaturen beständige Lastabtragung möglich ist.

Aus der Druckschrift JP 0000H0321433 A ist ein rohrförmiger Hohlstab aus faserverstärktem Kunststoff bekannt, in dessen Hohlraum Polyesterharz-Beton eingespritzt wird. Dies dient zwar der Einsparung von faserverstärktem Kunststoff, die dauerhafte und temperaturbeständige Zugfestigkeit des derart bewehrten Betonbauteils ist jedoch nicht verbessert, ebenso wenig die Anbindung der Fasern an den Beton des Betonbauteils.

Die Druckschrift EP 0 170 499 A2 beschreibt ein Bewehrungselement, bei dem Garne in eine parallele Anordnung gebracht und mit einem aushärtenden Material imprägniert sind. Als das aushärtende Material sind neben Kunstharzen auch anorganische Materialien wie Zement vorgesehen. Es ist weiterhin ein Herstellungsverfahren des Bewehrungselements offenbart. Die Garne werden dazu gemeinsam durch ein Bad des aushärtenden Materials geführt und danach weiterbehandelt. Das Verfahren ist für den Einsatz von Kunstharzen geeignet, Partikel können jedoch zumindest nicht vollständig zwischen die gebündelten Garne dringen und diese benetzen.

Nach Hunashyal, A. M.; Tippa, S. V.; Quadri, S. S. Banapurmath, N. R: Experimental Investigation on Effect of Carbon Nanotubes and Carbon Fibres on the Behavior of Plain Cement Mortar Composite Round Bars under Direct Tension. International Scholarly Research Network -ISRN Nanotechnology, 2011, Article 10856849, doi:10.5402/2011/856849 werden die Effekte von Kohlenstoffasern auf die Festigkeit von Zementstäben untersucht. Allerdings werden die Fasern ungerichtet in das mineralische Matrixmaterial gemischt, so dass nur ein Teil der Fasern überhaupt in Zugrichtung trägt. Zudem kommen zwangsläufig kurze Fasern zum Einsatz, deren Tragfähigkeit im Matrixmaterial allein bedingt durch die geringe Länge einer Anbindung an die die Matrix als nur gering eingeschätzt werden muss.

Ein herkömmlicher Faserverbundwerkstoff besteht aus einem Verstärkungsstoff, der in eine Matrix eingebettet ist. Als Matrix können sowohl duroplastische als auch thermoplastische Polymere eingesetzt werden. Als duroplastische Matrixsysteme werden die relativ preisgünstigen Polyesterharze, Vinylesterharze und Epoxidharze verwendet.

Um spezielle Eigenschaften wie beispielsweise Gleiteigenschaften, nachträgliche Verformung unter Wärme und Abriebfestigkeit zu verbessern, können auch thermoplastische Faserverbundwerkstoffe hergestellt werden. Als herkömmliche Matrixsysteme kommen in dem Fall vorwiegend Polyamide, Polypropylene und Polyethylene zum Einsatz.

Als Verstärkungsmaterial kommen nach dem Stand der Technik bei einer überblicksmäßigen Betrachtung vorwiegend synthetische Fasern aus Glas, Kohlenstoff und Aramid zum Einsatz, die als Rovings, Gelege, Gewebe oder Vliese verwendet werden können. Damit können die Eigenschaften absolut als auch in ihrem Verhältnis zwischen Längs- und Querrichtung in einem weiten Bereich variiert werden.

Die Herstellung von herkömmlichen Bewehrungselementen aus faserverstärktem Kunststoff erfolgt durch Pultrusion. Der prinzipielle Aufbau einer Pultrusionsanlage weist die folgenden Elemente auf:
- Faserregal,
- Faserführungen,
- Imprägniereinrichtung,
- Formgebungs- oder Härtungswerkzeug,
- Ziehvorrichtung und
- Ablängeinheit.

Im Pultrusionsverfahren werden die Faserrovings über Faserführungen aus einem mehrstöckigen Spulenlager in das Harzbad, die Imprägniereinrichtung, geführt. Die Fasern durchlaufen mehrere Vorformstationen, so dass sie an die gewünschte Profilform herangeführt werden. An den Faserführungen können Matten, Gewebe, Gelege oder Vliese in den Prozess integriert werden, um die mechanischen Eigenschaften gegenüber einer rein unidirektionalen Verstärkung, wie sie durch Fasern erreicht wird, anzupassen und zu optimieren.

Grundsätzlich kann zwischen den folgenden drei Verfahren zur Harzimprägnierung unterschieden werden, dem gängigen Wannenverfahren für einfache Querschnitte im offenen Harzbad, dem Durchziehverfahren insbesondere zur Herstellung von Profilen mit geometrisch komplexen Querschnitten als und dem Einspritzverfahren, bei dem die Verstärkungsfasern ohne Umlenkung durch das Imprägnierwerkzeug geführt werden.

In einem temperierten Werkzeug mit einer Länge von 0,5 m bis 2,5 m finden anschließend die letztendliche Formgebung des Profils sowie die Heißaushärtung bei Temperaturen zwischen 100 °C bis 200 °C statt. Das fertige Profil und somit die Fasern mitsamt dem Matrixsystem und dem Verstärkungsmaterial werden durch eine sich anschließende Ziehvorrichtung, z. B. in Form eines Raupenabzugs oder von pneumatischen Greifern, kontinuierlich gefördert und bei Prozessgeschwindigkeiten von 0,1 m/min bis 1,2 m/min aus dem Werkzeug gezogen (daher auch der englische Name Pultrusion aus to pull - ziehen und extrusion - das Durchdrücken).

Das Strangziehverfahren eignet sich, um (relativ) preisgünstig faserverstärkte Kunststoffprofile herzustellen. Die Qualität des so gewonnenen Verbundwerkstoffes ist durch die hohe Härtungstemperatur und die konstanten Bedingungen deutlich über der mit kaltgehärteten Handverfahren erreichbaren Qualität. Höhere Qualitäten können durch aufwändige Prepreg-Autoklavierverfahren erreicht werden.

Vor allem die Geschwindigkeit der Herstellung, verbunden mit dem hohen Automatisierungsgrad und den damit einhergehenden niedrigeren Kosten, eröffnen faserverstärkten Kunststoffprofilen, hergestellt im Pultrusionsverfahren, neue Anwendungsfelder wie zum Beispiel als konstruktiver Ersatz für Stahlprofile im Hochbau, Leichtbau oder in Bereichen mit starker Korrosion. Ähnliches gilt für die Herstellung von GFK-Bewehrung.

Die Nachteile der bekannten Lösungen, von denen vorstehend ein repräsentativer Querschnitt dargestellt wurde, bestehen insgesamt darin, dass die als Matrixmaterial verwendeten Kunststoffe sehr temperaturanfällig sind. Ab Temperaturen zwischen 40 °C und 120 °C wird die Beschichtung weich und verliert ihre Funktion. Bei einem Bauwerk sind für den Brandfall jedoch Temperaturen von bis zu ca. 500 °C nachzuweisen. Auch eine andauernde Belastung der Kunststoffe kann zum Kriechen der Beschichtung und damit zur ungewollten Verformungszunahme des Verbundbauteils führen. Die Dauerhaftigkeit, die bei Kunststoffen für eine begrenzte Zeit gegeben ist, kann insbesondere durch das alkalische Milieu im Beton zu einer Versprödungen bzw. Alterung führen.

Daher ist es die Aufgabe der Erfindung, ein stabförmiges Bewehrungselement für den Betonbau zur Verfügung zu stellen, das auf die polymere Kunststoffbeschichtung verzichtet, dennoch nicht rostet, temperaturbeständig sowie auch im Übrigen dauerbeständig ist, eine hohe Tragfähigkeit besitzt und keine Vorspannung benötigt.

Die Aufgabe der Erfindung wird gelöst durch ein Verfahren zur Herstellung eines ausgehärteten Bewehrungsstabs gemäß Anspruch 1. Das Filamentbündel kann als einzelne Filamente, als ein auf einzelne Garne aufgeteiltes Filamentbündel oder als einzelne Garne, bevorzugt mit jeweils weniger als 50.000 (50K) einzelnen Filamenten, besonders bevorzugt weniger als 25.000 (25K), ganz besonders bevorzugt weniger als 12.000 (12K) einzelnen Filamente vorliegen. Die vorteilhafteste Verarbeitung ist bei einer Anzahl von weniger als ca. 6.000 (6K), vor allem weniger als ca. 3.000 Filamenten (3K) zu erwarten. Diese Anzahl von Filamenten als das Optimum anzusehen.

Oberhalb der Aufweitungseinrichtung können die Garne deutliche mehr Filamente enthalten. Es ist jedoch zu empfehlen, dass Garne über 50K aufgeteilt werden, besser auch noch Garne über 25K und am besten auch Garne über 12K. Dadurch wird das nachfolgende Aufspreizen erleichtert, sofern jeweils eine niedrige Anzahl einzelner Filamente vorgesehen ist. Zudem erleichtern die dünneren Garne, die weniger Filamente aufweisen, das Eindringen der Reinigungs- und Aktivierungsmittel oder der Matrixsuspension in das Garn, so dass die Filamente besser behandelt bzw. beschichtet werden. Statt des Aufspreizens können auch mehrere dünnere Garne getrennt zugeführt und erst zusammengeführt werden, nachdem die enthaltenen Filamente mit dem Matrixmaterial umhüllt wurden.

Bei Carbonfasern sind derzeit Filamentzahlen von 3K, 6K, 12K, 24K (25K) und 48K (50K) üblich, so dass auch mehrere einzelne Garne, z. B. 3k oder 6K, zur der Aufweitungseinrichtung geführt oder direkt der vorgesehenen Behandlung unterzogen werden können. 100K-Garne werden gewöhnlich durch das Doppeln von 50K-Garnen erreicht. Zukünftig wird mit Filamentzahlen von 100K, 200K oder 400K in den Garnen gerechnet.

Durch das vorgelagerte Aufspreizen umhüllt das mineralische Matrixmaterial die Filamente im Wesentlichen vollständig. Das Filamentbündel wird in einen abbindungsfähigen Zustand überführt. Im darauffolgenden Verfahrensschritt werden die umhüllten Filamente wieder zu einem Filamentbündel zusammengeführt und in einem Mundstück oder in einer Schalung einer Formgebung unterzogen.

Die Erfindung unterliegt nicht mehr dem vorbekannten Drang zum kompakten Stabquerschnitt, bei dem die Filamente so eng liegen, dass kein Raum zwischen den Filamenten für die Zementpartikel vorhanden ist. Andererseits werden mineralische Suspensionen eingesetzt, z. B. unter Verwendung von Fein- bzw. Feinstzement, die wesentlich besser die Multifilamentgarne durchdringen. Auch wenn der Durchmesser dadurch etwas vergrößert ist, liegt das Gewicht dennoch weit unter dem einer Stahlbewehrung bei gleicher Kraftaufnahme.

Der Abstand der Garnfilamente zueinander, und damit der Stabquerschnitt, wird im Rahmen des technologischen Ablaufs jeweils soweit vergrößert, dass das mineralische Matrixmaterial, vorliegend als eine Suspension bzw. mineralische Partikel, einen hinreichenden Freiraum zwischen den Filamenten innerhalb des Filamentbündels bzw. des Garns bekommen. Mit diesem Vorgehen wird ein sicherer Verbund zwischen den einzelnen Filamenten des Stabes gewährleistet, nachdem das mineralische Matrixmaterial abgebunden hat. Der Stabquerschnitt kann dabei verschiedene Querschnittsformen aufweisen. Die Oberfläche des Stabes kann glatt oder profiliert sein. Die Oberfläche kann auch durch weitere Maßnahmen, wie Besandung oder chemische Behandlung, gestaltet werden.

Das Bewehrungselement wird bei der Formgebung in eine Stabform überführt. Danach ist es universell, ebenso wie ein stählernes Bewehrungselement, einsetzbar zum variablen Aufbau unterschiedlicher Bewehrungen.

Es hat sich als günstig erwiesen, wenn das Filamentbündel im Wesentlichen Carbonfilamente, Basaltfilamente und/oder Glasfilamente aufweist. Dabei können die spezifischen Eigenschaften der verschiedenen Fasermaterialien genutzt werden. Auch eine Kombination unterschiedlicher Fasermaterialien, die dann auch zu einer Kombination der entsprechenden Eigenschaften führt, ist vorteilhaft. Weitere Materialien der Filamente sind, entsprechende vorteilhafte Eignung vorausgesetzt, mit umfasst, die vorherige Aufzählung insoweit beispielhaft. Soweit technisch realisierbar, werden Filamente auch unmittelbar nach ihrer Erzeugung mit dem Matrixmaterial versehen. So könnte beispielsweise eine Glasfaser sofort nach ihrer Herstellung im Anschluss an die Spinndüse mit einem Matrixmaterial beschichtet werden, bevorzugt in Trockenform.

Vorteilhafter Weise wird das Eindringen der Suspension zwischen die Filamente durch Vibration der Suspension, Vibration der Filamente oder Garne, Anwendung eines Vakuums und/oder eine Vorbehandlung der Filamente oder Garne unterstützt. Zur Vibration der Filamente wird bevorzugt die Aufweitungseinrichtung, durch die die Garne laufen, vibrierend angetrieben.

Bevorzugte Maßnahmen zur Vorbehandlung der Filamente oder Garne, die alternativ oder gemeinsam angewandt werden können, umfassen in einer Ausführungsform auch eine Reinigung, dabei vor allem die Entfernung vorhandener Schlichten, sofern sie die Verbindung zwischen Filament und Matrixmaterial behindern. Sie umfassen weiterhin eine Oberflächenaktivierung und das Aufbringen geeigneter Schlichten und Beschichtungen. Besonders bevorzugt erfolgt die Oberflächenaktivierung der Filamente oder Garne durch eine Plasmabehandlung. Diese Maßnahmen sind einzeln oder gemeinsam geeignet, das Anhaften der mineralischen Suspensionen an der Oberfläche der Filamente oder Garne zu verbessern, so dass es zu einer möglichst vollständigen Beschichtung kommt.

Zur vorgesehenen Vorbehandlung gehört es auch, dass die verwendeten Multifilamentgarne vor der Zusammenführung zur Stabform zur besseren Anbindung des Matrixmaterials an die Carbonfilamente optional mit einer Suspension aus Kristallisationskeimen infiltriert werden. Dies führt ebenfalls zu einem verbesserten Verbund der Filamente untereinander und auch

Günstig ist es ebenfalls, wenn die profilierte Oberfläche des Bewehrungselements durch die Form der Schalung oder durch den Pultrusionsprozess, durch auf die Schalung aufgebrachte Chemikalien, durch nach dem Ausschalen auf die Oberfläche des Bewehrungselements aufgebrachte Chemikalien und/oder durch mechanische Bearbeitung der Oberfläche des Bewehrungselements hervorgerufen wird. Alle diese oder darüber hinausgehende Maßnahmen zur Profilierung der Oberfläche des Bewehrungselements können alternativ oder gemeinsam zur Anwendung kommen. Die Profilierung der Oberfläche sorgt für eine optimal kraftübertragende Anbindung des Bewehrungselements im späteren Betonbauteil, wenn es von Beton als dem Matrixmaterial des späteren Betonteils umgeben ist.

Die Herstellung des Bewehrungselements erfolgt bei einer bevorzugten Ausgestaltung des erfindungsgemäßen Verfahrens in der nachfolgend beschriebenen Weise. Es kommen sehr feine Garne mit wenigen Filamenten zum Einsatz, wobei zur Anzahl der Filamente auf die Beschreibung des Verfahrens oben verwiesen wird. Zur besseren Benetzung der Filamente kann zusätzlich eine Oberflächenaktivierung vorgenommen werden, beispielsweise durch eine Plasmabehandlung als vorgelagertes Verfahren oder allein oder zusätzlich durch das Aufbringen geeigneter Schlichten oder Beschichtungen. Gegebenenfalls müssen vorhandene Schlichten zuvor entfernt werden, soweit die nicht die Beschichtung unterstützen. In den einzelnen Schritten des Herstellprozesses werden die Garne auf Abstand gehalten, z. B. durch Öffnungen in einer Platte. Sie können durch ein erstes Bad geführt werden, in dem die Eigenschaften der Garne an den anschließenden Tränkungsvorgang mit einem mineralischen Matrixmaterial angepasst werden.

Anschließend werden die Garne, wie oben grundlegend beschrieben, in einem ausreichenden Abstand, bevorzugt hervorgerufen durch die Aufweitungseinrichtung, wie eine garnführende Öffnungen aufweisende Aufweitungsscheibe, durch eine mineralische Suspension geführt. Das Eindringen der Suspension kann durch zahlreiche zusätzliche Maßnahmen wie Umlenken der Garne, Vibration der Suspension, Vibration der Garne und/oder Vakuumieren verbessert werden.

Vorteilhafte Ausgestaltungen sehen in Abkehr von dem vorgenannten Prinzip der Nutzung einer fertigen mineralischen Suspension vor, zumindest einen Teil des mineralischen Matrixmaterials im Vorfeld trocken zwischen die Filamente zu bringen, beispielsweise durch Einblasen, um das Wasser später hinzuzufügen, oder in umgekehrter Folge. In dem darauffolgenden Schritt werden die so vor- und teilbeschichteten Garne wie oben beschrieben mit dem fehlenden Bestandteilen versehen, im einfachsten Fall mit Wasser. Da hierfür keine Wanne, Bad oder ähnliches zum Benetzen der Garne erforderlich ist, kann diese Variante des erfindungsgemäßen Verfahrens in einer vereinfachten Vorrichtung oder sogar ohne eine Vorrichtung ausgeführt werden. Im letzten Fall werden die vorbereiteten Garne vor dem Einsatz einfach befeuchtet, um danach zum Abbinden geformt zu werden.

Im Anschluss an die Beschichtung werden die beschichteten Garne zusammengeführt und in einem Mundstück in die gewünschte Stabform überführt, im Sinne einer Pultrusion oder zumindest von Teilschritten einer Pultrusion.

Alternativ kann die Stabform auch über eine Schalung generiert werden, welche auch profiliert sein kann. Das Material der Schalung ist weitgehend frei wählbar. Es sind festen Schalungen aber auch flexible Schalungen in Form von Kunststoffschläuchen vorgesehen. Die Schalung kann auch gewunden, abgewinkelt oder in sonstiger Weise nichtlinear ausgeführt sein, so dass entsprechende Bewehrungselemente auf diese Weise erzeugt werden können.

Die Aufgabe der Erfindung wird auch gelöst durch eine Vorrichtung zur Herstellung eines ausgehärteten Bewehrungsstabs gemäß Anspruch 9. Zudem können weiterhin zumindest eine Rütteleinrichtung und/oder zumindest eine Verdichtungseinrichtung für den im Ergebnis der Beschichtung der Filamente mit der mineralischen Matrix gebildeten Rohling vorgesehen sein. Besonders bevorzugt ist auch eine Vorrichtung, bei der weiterhin die Aktivierungseinrichtung zur Reinigung, Bearbeitung, Benetzung und Tränkung der Filamente ausgeführt und mit einem Aktivierungs- und Reinigungsmittel befüllt ist, und/oder zur Plasmabehandlung der Filamente ausgeführt ist.

Mit der Erfindung werden rostfreie Bewehrungen, beispielsweise aus Carbon und Beton, geschaffen, die eine hohe Tragfähigkeit haben und dennoch leicht sind. Es kann auf Kunststoffbeschichtungen verzichtet werden. Die erfindungsgemäß gewonnene Bewehrung ist korrosionsunempfindlich und deutlich temperaturbeständiger sowie dauerhafter als die Mehrzahl der heute verfügbaren Stäbe aus faserverstärkten Kunststoffen.

Der fehlende Kunststoff in der erfindungsgemäßen Bewehrung hat weiterhin einen erheblichen Vorteil in der Nachhaltigkeitsbetrachtung und führt zu deutlichen Kosteneinsparungen, da auch auf die energie- und zeitaufwendigen Trocknungs- und Härtungsprozesse verzichtet werden kann. Weitere wesentliche Vorteile sind:
- kein Kunststoff mehr zwischen Beton und Garnen/Filamenten notwendig;
- nicht korrosionsanfällig;
- bei gleicher Tragfähigkeit leichter als eine Stahlbewehrung;
- temperaturbeständiger als bisherige Lösungen;
- dauerhafter als bisherige Lösungen;
- leicht herstellbar;
- keine aufwendigen Pultrusionsmaschinen notwendig;
- Vorspannung der Garne nicht notwendig, aber dennoch möglich;
- Kombination von Filamenten aus verschiedenen Materialien, wie z. B. Carbon, Glas, Aramid und/oder Basalt, und Kombination der Eigenschaften möglich;
- Querschnittsform frei anpassbar, z. B. rund, oval, rechtecking, quadratisch, flach; jeweils auch hohl;
- Geometrie kann auch durch eine Schalung vorgegeben werden;
- Profilierbare Oberfläche, sichert einen besseren Verbund, insbesondere bei größeren Querschnitten;
- hervorragender Verbund zum später umgebenden Beton im Bauteil, da es sich um einen Verbund zwischen Beton und Beton handelt.

Mit diesem Verfahren und seinen Varianten ist es möglich, fast beliebig gekrümmte Profile und z. B. auch schraubenförmige Profile herzustellen.

Weitere Einzelheiten, Merkmale und Vorteile der Erfindung ergeben sich aus der nachfolgenden Beschreibung von Ausführungsbeispielen mit Bezugnahme auf die zugehörigen Zeichnungen. Es zeigen:
Fig. 1: schematisch eine Ausführungsform einer Vorrichtung zur Herstellung eines Bewehrungsstabs;
Fig. 2: schematisch eine Ausführungsform eines Bewehrungselements;
Fig. 3: schematisch eine Ausführungsform eines Bewehrungsstabs mit nichtlinearer Struktur;
Fig. 4: schematisch eine Ausführungsform eines Bewehrungsstabs mit Filamenten aus unterschiedlichen Materialien;
Fig. 5: schematisch eine Auswahl von Querschnittsformen eines Bewehrungsstabs; und
Fig. 6: schematisch eine Auswahl von Oberflächenprofilierungen eines Bewehrungsstabs.

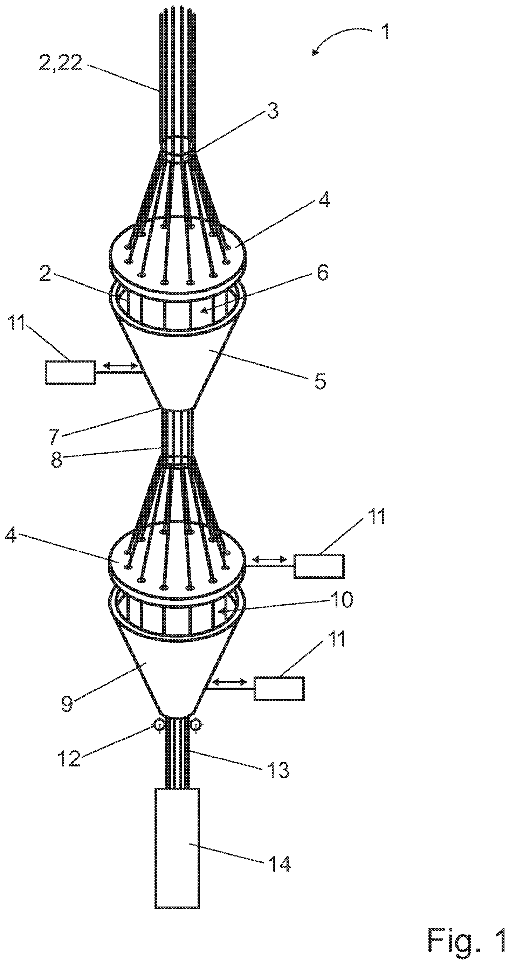

Fig. 1 zeigt eine Vorrichtung zur Herstellung eines Bewehrungsstabs, gebildet aus Filamenten 22, die in eine Betonmatrix 21 eingebettet sind, wobei auch andere mineralische Materialien umfasst sind. Vor dem Auftrag der Betonmatrix 21 auf die Filamente 22 werden deren Oberflächen bevorzugter Weise gereinigt und für einen besseren Verbund mit einer Matrixsuspension 10, dem fließfähigen Ausgangsmaterial für die Betonmatrix 21 aktiviert. Dadurch werden die sehr glatten, schwer benetzbaren Filamente 22 besser von der Matrixsuspension 10 umhüllt.

Die erfindungsgemäße Vorrichtung 1 weist eine Ablenkeinrichtung 3 auf, in die die Filamentbündel 2 mit den Filamenten 22 zunächst einlaufen. Danach durchlaufen die Filamentbündel 2 eine Aufweitungseinrichtung 4. Dort werden die Filamentbündel 2 so weit voneinander separiert, dass ein flüssiges Matrixmaterial, wie die Matrixsuspension 10, oder zuvor noch andere zur Vorbehandlung notwendige Flüssigkeiten die Filamente 22 allseitig benetzen können. Die Darstellung der Aufweitungseinrichtung 4 ist aus Gründen der Übersicht stark vereinfacht. So ist es auch vorgesehen, Löcher zum Durchführen der Filamente 22 oder Filamentbündel 2 auf der gesamten Oberfläche verteilt und in deutlich größerer Anzahl, beispielsweise 100, anzuordnen.

Die hier dargestellte Einrichtung zur Vorbehandlung der Filamente 22 zur verbesserten Benetzung durch die Matrixsuspension 10 ist als eine Aktivierungseinrichtung 5 ausgeführt, die mit einem Aktivierungs- und Reinigungsmittel 6 befüllt ist. Der Schritt der Vorbehandlung umfasst z. B. die Reinigung, Bearbeitung, Benetzung bzw. Tränkung der Filamente 22. Durch das Aktivierungs- und Reinigungsmittel 6 werden die Filamentbündel 2 hindurchgeführt, die Oberflächen der Filamente 22 entsprechend gereinigt, benetzt und/oder aktiviert und nachfolgend in einer Zusammenführungseinrichtung 7 wieder verdichtet. Auf die Verdichtung kann jedoch auch verzichtet werden, sie bietet sich aber zur Vereinfachung des Weitertransports zur eigentlichen Bildung des Bewehrungsstabs 20 an und ermöglicht zudem eine Zwischenlagerung der aktivierten Filamentbündel 8 im Falle eines diskontinuierlichen Prozesses, der im Gegensatz zur hier dargestellten bevorzugten Ausgestaltung ebenfalls von der Erfindung umfasst ist.

Mit der Aktivierungseinrichtung 5 kann auch eine Plasmabehandlung am trockenen Garn vor der Tränkung mit einer Suspension vorgenommen werden, insbesondere werden dadurch die Oberflächeneigenschaften (Benetzbarkeit) der vorhandenen herstellungsbedingten Schlichte positiv beeinflusst wird.

Auf die Vorbehandlung folgt die eigentliche, nach der Erfindung obligatorische Bildung des Bewehrungsstabs in der Beschichtungseinrichtung 9. Dabei werden die vorbehandelten, alternativ auch unbehandelten Filamente 2 wiederum durch eine Ablenkeinrichtung 3, danach zur Aufweitungseinrichtung 4 geführt und dort erneut separiert. Der mittels Aufweitungseinrichtung 4 hervorgerufene Abstand zwischen den Filamentbündeln 2 beziehungsweise den einzelnen Filamenten 22 wird insbesondere danach bemessen, welche Korngrößen die Matrixsuspension 10 aufweist, damit diese ohne Probleme zwischen die Filamente 22 gelangen und jedes der Filamente 22 durch die Matrixsuspension 10 vollständig umschlossen wird.

Die Aktivierungseinrichtung 5 und die Beschichtungseinrichtung 9 können Umlenkstellen enthalten, um durch die interne Garnablenkung das Einbringen der Reinigungs- und Aktivierungsmittel sowie der Matrixsuspension weiter zu verbessern.

An der Aufweitungseinrichtung 4 ist eine Rütteleinrichtung 11 zu sehen, die die Aufweitungseinrichtung 4 und damit die sie durchlaufenden Filamentbündel 2 rüttelt, ebenso alternativ oder zusätzlich an der Beschichtungseinrichtung 9. Dadurch wird die Verbindung mit der flüssigen Matrixsuspension 10, hier zur Ausbildung einer Betonmatrix 21, verbessert. Alternativ oder zusätzlich ist es auch möglich, die Matrixsuspension 10 in der Beschichtungseinrichtung 9 selbst zu rütteln oder auf andere Weise die Benetzung der Oberfläche der Filamente 22 zu verbessern, desgleichen die Aktivierungseinrichtung 5, wie dargestellt, oder die obere Aufweitungseinrichtung 4 mit dem Ziel, die Reinigung und Aktivierung der Filamente zu verbessern.

Des Weiteren kann durch späteres Umlenken, wie oben erwähnt, Walzen und ähnliche mechanische Einwirkungen auf das Filamentbündel 2 das Eindringen der Matrixsuspension 10 zwischen die Filamente 22 noch weiter verbessert werden. Nach der "Tränkung" können die Garne zunächst abgelegt oder direkt - wie weiter unten noch ausgeführt - in eine stehende bzw. liegende Schalung eingebracht oder auch einem Pultrusionsprozess zugeführt werden.

Nachdem die Filamentbündel 2 die Matrixsuspension 10 passiert haben, werden sie wiederum in einer Zusammenführung 7 verdichtet. In der dargestellten, besonders bevorzugten Ausführungsform wird die Dichte der Filamente 22 dadurch noch weiter erhöht, dass eine zusätzliche Verdichtungseinrichtung 12 vorgesehen ist, beispielsweise ausgeführt als am Umfang angeordnete Pressrollen.

Nach der "Tränkung" können die Garne oder Filamentbündel 2, die nun als noch formbarer Rohling 13 eines Bewehrungsstabs 20 vorliegen, zunächst temporär abgelegt werden. Nach einer besonders bevorzugten Ausführungsform ist es jedoch vorgesehen, den Rohling 13 direkt in eine stehende oder liegende Schalung 14 einzubringen oder auch einem Pultrusionsprozess zuzuführen. Dabei erfolgen die endgültige Formgebung und das zumindest teilweise Aushärten in der Schalung 14. Dies kann eine Gleitschalung sein, eine feste Schalung, eine flexible Schlauchschalung oder eine Schalung anderer Art. Besonders bevorzugt wird in der Schalung 14 bereits das äußere Profil des Bewehrungsstabs 20 erzeugt, das eine noch verbesserte kraftschlüssige Verbindung mit dem späteren Betonmatrixmaterial in dem Betonteil, wo die Bewehrung ihren Einsatz findet, hervorruft.

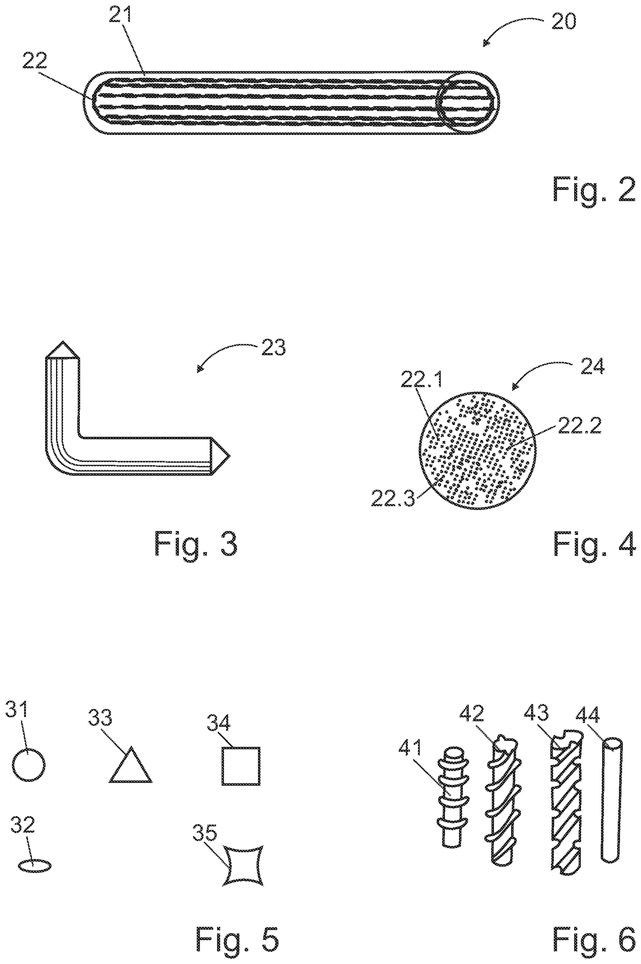

Fig. 2 zeigt schematisch eine Ausführungsform eines Bewehrungselements. Der Bewehrungsstab 20 ist hier ausgeführt als Multifilamentstab mit Betonmatrix 21 mit den innenliegenden Garnen bzw. Filamenten 22. Gemäß der vorliegenden Erfindung ist der Bewehrungsstab 20 hoch belastbar, da alle Filamente 22 an der Lastabtragung teilnehmen. Sie sind nämlich durch die allseitige Benetzung mit der Betonmatrix 21 sicher in dieser eingebunden.

Fig. 3 zeigt beispielhaft, dass ein Bewehrungsstab 20 u. a. auch in gebogener Form als gebogener Bewehrungsstab 23 herstellbar ist. Dies ist insbesondere wichtig bei auf Länge vorgefertigten Bewährungsstäben 20, deren Enden zur besseren Verankerung im Betonteil oder zur Verbindung mit anderen Bewehrungselementen bereits umgebogen sind. Darüber hinaus sind verschiedene Formen des Bewehrungsstabs 20 vorgesehen, die beispielsweise einer besseren Verankerung im Beton des späteren Betonteils oder einer besseren Verbindung mit weiteren Bewehrungsstabmaterialien dienen können.

Zur Erreichung einer gebogenen Form ist auch eine Radius-Pultrusion vorgesehen. Im Gegensatz zum Standardverfahren wird bei diesem Verfahren die Form, deren Kavität dem Verlauf des gewünschten Profils entspricht, schrittweise über das entstehende Profil bewegt. Der in diesem Verfahren nur einfach vorhandene Greifer hält das Profil während der Vorwärtsbewegung der Form fest und gibt das entstandene Profil bei der Rückwärtsbewegung der Form wieder frei.

Bei einer weiteren Ausgestaltung des erfindungsgemäßen Verfahrens ist eine solche Ausrüstung des Bewehrungsstabes vorgesehen, die lokal eine Umformung ermöglicht, ähnlich wie sie bei Stahl oder auch faserverstärktem Kunststoff nach vorheriger Erwärmung erfolgen kann. Die Lösung nach der Erfindung sieht hierzu zwei Komponenten vor, nämlich die mineralische Matrix, insbesondere Feinbeton, auf dem größten Teil der Länge des Bewehrungsstabes und an der eng begrenzten Biegestelle, die ohnehin in der Regel im Endbereich oder in dessen Nähe vorzusehen ist und keiner maximalen Zugbelastung ausgesetzt ist, eine Kunstharzmatrix. In dem Bereich, wo die Kunstharzmatrix eingesetzt ist, kann dann gebogen werden.

Fig. 4 zeigt schematisch im Querschnitt eine Ausführungsform eines Bewehrungsstabs 20 mit Filamenten 22 aus unterschiedlichen Materialien, ausgeführt als Multimaterialbewehrungsstab 24. Im dargestellten Beispiel kommen als Material der Filamente 22 Carbon 22.1, Basalt 22.2 und Glas 22.3 zum Einsatz. Durch den gleichzeitigen Einsatz unterschiedlicher Materialien in einem Multimaterialbewehrungsstab 24 wird es möglich, spezifische Eigenschaften der verschiedenen Materialien in der Weise zu kombinieren, dass ein Multimaterialbewehrungsstab 24 mit breiteren Einsatzmöglichkeiten entsteht, zumindest aber eine optimale Anpassung an den vorgesehenen Einsatz erreicht wird. Der Multimaterialbewehrungsstab 24 ist eine Ausführungsform der Erfindung, die auch ohne ausdrückliche Erwähnung nach dem erfindungsgemäßen Verfahren hergestellt wird und auch ohne ausdrückliche Erwähnung in den weiteren genannten Ausgestaltungen verfügbar ist, wie beispielsweise mit den beschriebenen Querschnittsformen oder Profilierungen. Anstelle der Filamente 22 kommen dann auch Carbonfilamente 22.1, Basaltfilamente 22.2und/oder Glasfilamente 22.3im Verfahren zum Einsatz.

Fig. 5 zeigt beispielhaft eine Vielzahl von möglichen Querschnitten rund 31, oval 32, dreieckig 33, quadratisch 34 und kissenförmig 35. Darüber hinaus sind zahlreiche weitere vorteilhafte Varianten von Querschnitten vorstellbar, in denen bevorzugte Ausgestaltungen eines erfindungsgemäßen Bewehrungsstabs 20 oder auf zumindest einen Teil der Länge ausgeführt sind.

Fig. 6 zeigt schematisch eine Auswahl von Oberflächenprofilierungen eines Bewehrungsstabs 20. Die Profilierungen der Oberfläche, wie Ringprofil 41, erhabenes Gewindeprofil 42, eingesenktes Gewindeprofil 43 und Rauigkeit 44 stellen vorliegend nur beispielhaft einige Möglichkeiten dar. Die Profilierungen kann z. B. durch die Form der Schalung, durch den Pultrusionsprozess, durch Chemikalien, wie beispielsweise Verzögerer auf der Schalung, Säuerungsmittel nach dem Ausschalen oder auch mechanische Bearbeitung erfolgen, beispielsweise durch Schleifen, Fräsen, Feststoffstrahlen oder Besandung. Weitere Verfahren nach dem Stand der Technik sind hierbei ebenfalls vorgesehen.

### Bezugszeichenliste

- 1: Vorrichtung zur Herstellung eines Bewehrungstabs
- 2: Filamentbündel
- 3: Ablenkeinrichtung
- 4: Aufweitungseinrichtung
- 5: Aktivierungseinrichtung
- 6: Reinigungs- und Aktivierungsmittel
- 7: Zusammenführungseinrichtung
- 8: aktiviertes Filamentbündel
- 9: Beschichtungseinrichtung
- 10: Matrixsuspension
- 11: Rütteleinrichtung
- 12: Verdichtungseinrichtung
- 13: Rohling
- 14: Schalung
- 20: Bewehrungsstab
- 21: mineralisches Matrixmaterial, Betonmatrix
- 22: Filament
- 22.1: Carbonfilament
- 22.2: Basaltfilament
- 22.3: Glasfilament
- 23: gebogener Bewehrungsstab
- 24: Multimaterialbewehrungsstab
- 31: runder Querschnitt
- 32: ovaler Querschnitt
- 33: dreieckiger Querschnitt
- 34: quadratischer Querschnitt
- 35: kissenförmiger Querschnitt
- 41: Ringprofil
- 42: erhabenes Gewindeprofil
- 43: eingesenktes Gewindeprofil
- 44: Rauigkeit

## Patentansprüche

1. Verfahren zur Herstellung eines ausgehärteten Bewehrungsstabs, der zum Einbau in ein Betonbauteil vorgesehen ist, **dadurch gekennzeichnet, dass** ein Filamentbündel (2), aufweisend einzelne Filamente (22), ein auf einzelne Garne aufgeteiltes Filamentbündel (2) oder einzelne Garne durch wenigstes eine Aufweitungseinrichtung (4) gespreizt zumindest mit einem abbindbaren mineralischen Matrixmaterial (21) versehen und in einen abbindungsfähigen Zustand überführt wird, so dass das Matrixmaterial (21) die Filamente (22) im Wesentlichen vollständig umhüllt, danach werden die umhüllten Filamente (22) wieder zu einem Filamentbündel (2) zusammengeführt und in einem Mundstück oder in einer Schalung (14) einer Formgebung unterzogen, worauf das Aushärten zum Bewehrungselement erfolgt.

2. Verfahren nach Anspruch 1, wobei das Filamentbündel (2) im Wesentlichen Carbonfilamente (22.1), Basaltfilamente (22.2) und/oder Glasfilamente (22.3) aufweist.

3. Verfahren nach Anspruch 1 oder 2, wobei das Eindringen der Matrixsuspension (10) zwischen die Filamente (22) durch Vibration der Matrixsuspension (10), Vibration der Filamente (22) oder Garne, Anwendung eines Überdrucks der Matrixsuspension oder eines Vakuums und/oder eine Vorbehandlung der Filamente (22) oder Garne unterstützt wird.

4. Verfahren nach Anspruch 3, wobei zur Vorbehandlung der Filamente (22) oder Garne vorhandene Schlichten entfernt, eine Oberflächenaktivierung vorgenommen und/oder geeignete Schlichten und Beschichtungen aufgebracht werden.

5. Verfahren nach Anspruch 4, wobei die Oberflächenaktivierung durch eine den übrigen Maßnahmen zur Oberflächenaktivierung vorgelagerte Plasmabehandlung erfolgt.

6. Verfahren nach Anspruch 4, wobei die Oberflächenaktivierung durch eine Suspension aus Kristallisationskeimen erfolgt, mit der die die Filamente (22) zur besseren Anbindung des Matrixmaterials (21) infiltriert werden.

7. Verfahren nach Anspruch 1, wobei zumindest ein Teil des mineralischen Matrixmaterials (21) im trockenen Zustand zwischen die Filamente (22) gebracht und zum Abbinden erforderliches Wasser später hinzufügt wird, oder in umgekehrter Folge das mineralische Matrixmaterial (21) zwischen die befeuchteten Filamente (22) gebracht und damit der abbindungsfähige Zustand und die Umhüllung der Filamente herbeigeführt werden.

8. Verfahren nach einem der Ansprüche 1 bis 7, wobei die profilierte Oberfläche des Bewehrungselements durch die Form der Schalung (14), durch einen Pultrusionsprozess, durch auf die Schalung (14) aufgebrachte Chemikalien, durch nach dem Ausschalen auf die Oberfläche des Bewehrungselements aufgebrachte Chemikalien und/oder durch mechanische Bearbeitung der Oberfläche des Bewehrungselements hervorgerufen wird.

9. Vorrichtung zur Herstellung eines ausgehärteten Bewehrungsstabs, der zum Einbau in ein Betonbauteil vorgesehen ist, nach einem Verfahren gemäß einem der Ansprüche 1 bis 8, **dadurch gekennzeichnet, dass** eine Aufweitungseinrichtung (4), in der die Filamentbündel (2) separiert werden, eine Aktivierungseinrichtung (5), die einer Vorbehandlung der Oberfläche der Filamente (22) dient, eine mit einem mineralischen Matrixmaterial (10, 21) befüllbare Beschichtungseinrichtung (9) vorgesehen sind.

10. Vorrichtung nach Anspruch 9, wobei weiterhin zumindest eine Rütteleinrichtung (11) und/oder zumindest eine Verdichtungseinrichtung (12) und eine Schalung (14) vorgesehen sind.

11. Vorrichtung nach Anspruch 9 oder 10, wobei weiterhin die Aktivierungseinrichtung (5) zur Reinigung, Bearbeitung, Benetzung und Tränkung der Filamente (22) ausgeführt und mit einem Aktivierungs- und Reinigungsmittel (6) befüllt ist, und/oder zur Plasmabehandlung der Filamente (22) ausgeführt ist.

## Claims

1. A method for producing a cured reinforcement bar to be incorporated in a concrete component, **characterized in that** a filament bundle (2) comprising individual filaments (22), a filament bundle (2) divided into individual yarns, or individual yarns, is spread by at least one widening device (4) and provided with at least one settable mineral matrix material (21) and brought into a settable state, so that the matrix material (21) essentially completely encases the filaments (22), and subsequently the encased filaments (22) are brought together to form a filament bundle (2) again and are subjected to shaping in a mouthpiece or in a formwork (14), followed by curing to form the reinforcing element.

2. The method according to claim 1, wherein the filament bundle (2) essentially comprises carbon filaments (22.1), basalt filaments (22.2), and/or glass filaments (22.3).

3. The method according to claim 1 or 2, wherein the ingress of the matrix suspension (10) between the filaments (22) is aided by vibration of the matrix suspension (10), vibration of the filaments (22) or yarns, application of overpressure of the matrix suspension or a vacuum, and/or a pretreatment of the filaments (22) or yarns.

4. The method according to claim 3, wherein for pretreatment of the filaments (22) or yarns existing sizing agents are removed, a surface activation is performed, and/or suitable sizing agents and coatings are applied.

5. The method according to claim 4, wherein the surface activation is performed through a plasma treatment which precedes the further surface activation measures.

6. The method according to claim 4, wherein the surface activation is performed through a suspension of crystal nuclei with which the filaments (22) are infiltrated for better adsorption of the matrix material.

7. The method according to claim 1, wherein at least a part of the mineral matrix material (21) is placed between the filaments (22) in dry condition and water required for setting is added subsequently, or, in reverse order, the mineral matrix material (21) is placed between the wetted filaments (22), which results in the settable state and the encasing of the filaments.

8. The method according to any one of claims 1 to 7, wherein the profiled surface of the reinforcing element is produced by the shape of the formwork (14), a pultrusion process, chemicals applied to the formwork (14), chemicals applied to the surface of the reinforcing element after removal from the formwork, and/or mechanical processing of the surface of the reinforcing element.

9. An apparatus for producing a cured reinforcing bar to be incorporated in a concrete component according to a method according to any one of claims 1 to 8, **characterized in that** a widening device (4) in which the filament bundles (2) are separated, an activation device (5) serving for pretreatment of the surface of the filaments (22), and a coating device (9) fillable with a mineral matrix material (10, 21) are provided.

10. The apparatus according to claim 9, wherein further at least one vibrating device (11) and/or at least one compaction device (12) and a formwork (14) are provided.

11. The apparatus according to claim 9 or 10, wherein further the activation device (5) is configured for cleaning, processing, wetting and impregnation of the filaments (22) and is filled with an activating and cleaning agent (6), and/or is configured for plasma treatment of the filaments (22).

## Revendications

1. Procédé de fabrication d'une barre d'armature durcie par vieillissement qui est prévue pour l'encastrement dans un composant en béton, **caractérisé en ce qu'**un faisceau de filaments (2) présentant des filaments individuels (22), un faisceau de filaments (2) réparti sur des fils individuels ou des fils individuels est écarté par au moins un dispositif d'élargissement (4), pourvu d'au moins un matériau de matrice minéral (21) pouvant prendre et transféré dans un état capable de prise de sorte que le matériau de matrice (21) enveloppe essentiellement entièrement les filaments (22), les filaments enveloppés (22) sont ensuite de nouveau réunis en un faisceau de filaments (2) et soumis à un façonnage dans un bec ou dans un coffrage (14), suite à quoi le durcissement par vieillissement en l'élément d'armature s'effectue.

2. Procédé selon la revendication 1, dans lequel le faisceau de filaments (2) présente essentiellement des filaments de carbone (22.1), filaments de basalte (22.2) et/ou filaments de verre (22.3).

3. Procédé selon la revendication 1 ou 2, dans lequel la pénétration de la suspension de matrice (10) entre les filaments (22) est favorisée par vibration de la suspension de matrice (10), vibration des filaments (22) ou fils, application d'une surpression à la suspension de matrice ou d'un vide et/ou un prétraitement des filaments (22) ou fils.

4. Procédé selon la revendication 3, dans lequel des enduits présents sont éliminés, une activation de surface est effectuée et/ou des enduits et revêtements appropriés sont appliqués pour le prétraitement des filaments (22) ou fils.

5. Procédé selon la revendication 4, dans lequel l'activation de surface s'effectue par un traitement plasma situé en amont des mesures restantes pour l'activation de surface.

6. Procédé selon la revendication 4, dans lequel l'activation de surface s'effectue par une suspension de germes cristallins avec laquelle les filaments (22) sont infiltrés pour une meilleure prise du matériau de matrice (21).

7. Procédé selon la revendication 1, dans lequel au moins une partie du matériau de matrice minéral (21) est amenée à l'état sec entre les filaments (22) et de l'eau nécessaire pour la prise est ajoutée ultérieurement, ou en ordre inverse, le matériau de matrice minéral (21) est amené entre les filaments humidifiés (22) et l'état capable de prise et l'enveloppement des filaments sont ainsi provoqués.

8. Procédé selon une des revendications 1 à 7, dans lequel la surface profilée de l'élément d'armature est produite par la forme du coffrage (14), par un processus de pultrusion, par des produits chimiques appliqués sur le coffrage (14), par des produits chimiques appliqués après le décoffrage sur la surface de l'élément d'armature et/ou par usinage mécanique de la surface de l'élément d'armature.

9. Dispositif de fabrication d'une barre d'armature durcie par vieillissement qui est prévue pour l'encastrement dans un composant en béton, conformément à un procédé selon une des revendications 1 à 8, **caractérisé en ce qu'**un dispositif d'élargissement (4) dans lequel les faisceaux de filaments (2) sont séparés, un dispositif d'activation (5) qui sert à un prétraitement de la surface des filaments (22), un dispositif d'enrobage (9) pouvant être rempli d'un matériau de matrice minéral (10, 21) sont prévus.

10. Dispositif selon la revendication 9, dans lequel au moins un dispositif vibrant (11) et/ou au moins un dispositif de compactage (12) et un coffrage (14) sont en outre prévus.

11. Dispositif selon la revendication 9 ou 10, dans lequel le dispositif d'activation (5) est en outre réalisé pour le nettoyage, le traitement, le mouillage et l'imprégnation des filaments (22) et rempli d'un agent d'activation et de nettoyage (6), et/ou est réalisé pour le traitement plasma des filaments (22).
